(19) Europäisches Patentamt
European Patent Office
Office européen des brevets

(11) Veröffentlichungsnummer: **0 005 496**
**B1**

(12) **EUROPÄISCHE PATENTSCHRIFT**

(45) Veröffentlichungstag der Patentschrift: **15.07.81**

(51) Int. Cl.³: **D 01 F 6/06,** C 08 L 23/10, C 08 L 23/12

(21) Anmeldenummer: **79101383.2**

(22) Anmeldetag: **07.05.79**

(54) **Schwer entflammbare Polypropylenfaser und ein Verfahren zu deren Herstellung.**

(30) Priorität: **12.05.78 DE 2820939**
**29.05.78 DE 2823365**

(43) Veröffentlichungstag der Anmeldung:
**28.11.79 Patentblatt 79/24**

(45) Bekanntmachung des Hinweises auf die Patenterteilung:
**15.07.81 Patentblatt 81/28**

(84) Benannte Vertragsstaaten:
**AT BE CH DE FR GB IT LU NL SE**

(56) Entgegenhaltungen:
**DE-A-1 795 505**
**DE-B-2 424 410**

(73) Patentinhaber: **CHEMIE LINZ AKTIENGESELLSCHAFT, St. Peter-Strasse 25, A-4020 Linz (AT)**
(84) Benannte Vertragsstaaten: **BE CH FR GB IT LU NL SE AT**

(73) Patentinhaber: **Lentia Gesellschaft mit beschränkter Haftung, Schwanthalerstrasse 39 Postfach 20 16 26, D-8000 München 2 (DE)**
(84) Benannte Vertragsstaaten: **DE**

(72) Erfinder: **Kügler, Franz, Dr., Am Feldrain 22, A-4052 Ansfelden (AT)**
Erfinder: **Schneider, Heinrich, Dipl. Chem, Schumpeterstrasse 2, A-4045 Dornach (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 005 496 B1

ACTORUM AG.

# Schwer entflammbare Polypropylenfaser und ein Verfahren zu deren Herstellung

Die vorliegende Erfindung betrifft ein Verfahren zur Herstellung von schwer entflammbaren Polypropylenfasern.

Polypropylenfasern, die im Schmelzspinnverfahren hergestellt wurden, verfügen im Vergleich zu anderen Synthetic-Fasern über bemerkenswert gute Eigenschaften hinsichtlich Festigkeit und Strapazfähigkeit, die sie in Form von textilen Flächengebilden als Gewebe oder Vliese für die Verwendung als Rohmaterial für Heimtextilien oder Nadelfilzbodenbelägen, sowie für Gewebe oder Vliese für technische Zwecke besonders geeignet machen. Diesen guten mechanischen Eigenschaften steht als Nachteil die relativ gute Brennbarkeit der Fasern gegenüber.

Bekanntlich haben in den letzten Jahren mit der steigenden Verwendung von Syntheticfasern oder auch Schichtstoffen infolge ihrer mehr oder weniger guten Brennbarkeit die Brandunfälle im Wohnbereich oder Gastlokalen stark zugenommen und grosse Schäden an Sachwerten, aber auch an Menschenleben verursacht. Als Folge davon sind in zunehmendem Masse chemische Verbindungen entwickelt worden, mit denen Natur- aber auch Kunstfasern flammhemmend imprägniert werden können. (Siehe z.B. Zeitschr. «Textilpraxis internat.» 1975, H. 12, 1685 ff.)

Gemäss DE-OS 2743127 wird vorgeschlagen, Fasern oder Gewebe aus Polyester, Polyamiden oder Polyacrylnitril durch Aufbringen einer wässrigen Dispersion von bromhaltigen, aromatischen, aliphatischen oder cycloaliphatischen Verbindungen, die ausserdem eine monomere oder polymere organische Verbindung des vierwertigen Zinns enthält, durch Sprühen, Bedrukken, insbesondere durch Aufziehen und anschliessende Fixierung durch Behandlung auf 130–220°C flammfest zu machen. Die Menge der Bromverbindung, die vorzugsweise Hexabromcyclododekan ist, wird hierbei so gewählt, dass die Auflage an Brom nach der Wärmebehandlung, bezogen auf behandeltes Material 1 bis 8 Gew.% beträgt. Die Menge an organischer Zinnverbindung soll 5 bis 20 Gew.% der eingesetzten Bromverbindung betragen. Schliesslich wird auch noch der Zusatz eines Dispergators und/oder Schutzkolloids zur wässrigen Flotte empfohlen, um die Aufbringung zu erleichtern. Alle diese Substanzen geben einen relativ hohen Belag auf der Oberfläche der Faser, die eine Vergilbungsneigung derselben mit sich bringt, der durch Zusatz der organischen Zinnverbindung entgegengewirkt werden soll.

Abgesehen davon, dass ein derartiger Oberflächenbelag nicht ohne Auswirkung auf Griff sowie andere Eigenschaften der Form bleiben kann, unterliegt dieser Belag auch bei Gebrauch und Reinigung einer Abnützung, die zu einer Verminderung der flammhemmenden Eigenschaften führen muss.

Für Polypropylenfasern, die bekanntlich hydrophobe Eigenschaften haben, ist eine solche Imprägnierung überhaupt kaum geeignet.

Ein Ziel der vorliegenden Erfindung ist, eine Polypropylenfaser zu schaffen, die nicht durch Imprägnierung sondern durch Einarbeitung eines Flammschutzmittels in den Kunststoff flammfest gemacht ist. Dem stand aber entgegen, dass durch diesen Zusatz weder die verarbeitungstechnischen Eigenschaften, noch die Festigkeit, der Griff und schliesslich auch die Farbe leiden dürfen. Abgesehen davon bestand die Forderung, dass der eingearbeitete Flammhemmer keine korrodierende Wirkung auf die Spinneinrichtungen wie Extruder, Spinnpumpe und Spinnplatten ausüben darf und trotz der relativ hohen Temperaturen eine möglichst geringe Geruchsentwicklung auftreten soll.

In der AT-PS 331505 ist die Flammfestausrüstung speziell von Polypropylenmischungen mit einem Flammhemmer-System aus 2 bis 7 Gew.% 1,3,5-Tris-(2,3-dibrompropyl)-2,4,6-trioxohexahydrotriazin und 0,5 bis 2 Gew.% Antimontrioxyd beschrieben.

Dieses Flammhemmersystem hat einmal den Vorteil, dass die bromierte Triazinverbindung als schwer flüchtig aus dem Polypropylen nicht «ausschwitzt» und dass die Mischung bis etwa 220°C thermostabil bleibt und der flammhemmende Wirkstoff nicht wie andere Polybromverbindungen zu Bromwasserstoffabspaltung neigen, die Verfärbungen des Produktes, Erhöhung des Schmelzindexes der Polymerschmelze und nicht zuletzt starke Korrosion am Extruder usw. zur Folge haben.

Bei höheren Temperaturen von etwa 240–300°C, wie sie für den Schmelzspinnprozess von Polypropylen notwendig sind, tritt dagegen auch bei diesem Flammhemmer-System eine teilweise Zersetzung unter Bromwasserstoffabspaltung ein, die eine für die Faserherstellung untragbare Korrosion der Apparatur und Verfärbung der Faser mit sich brachte.

Es konnte nun überaschenderweise gefunden werden, dass eine bestimmte Gruppe von organischen Zinnverbindungen, die mindestens zwei Alkylgruppen tragen, eine Stabilisierung der flammhemmend wirkenden, bromierten Triazinverbindung bewirkt, so dass die diese Verbindung enthaltende Polypropylenmischung ohne Schwierigkeit dem Schmelzspinnverfahren unterworfen werden kann, wobei trotz der nötigen hohen Temperaturen weder eine Korrosion an der Apparatur, noch eine unangenehme Geruchsbelästigung zu verzeichnen ist und die physikalischen Eigenschaften der Faser voll entsprechen. Vor allem überraschend war, dass der Zusatz dieser Zinnverbindungen im Gegensatz zu anderen, auf Halogenverbindungen stabilisierend wirkenden Verbindungen, die flammhemmende Wirkung der bromierten Triazinverbindung nicht beeinträchtigt.

Gegenstand der Erfindung ist demnach eine schwer entflammbare Polypropylenfaser mit

einem Äthylengehalt von 0 bis maximal 10 Gew.%, die dadurch gekennzeichnet ist, dass sie 0,5 bis 10 Gew.% 1,3,5-Tris-(2,3-dibrompropyl)-2,4,6-trioxo-hexahydrotriazin und 0,15 bis 3,5 Gew.% Antimontrioxyd, sowie pro Mol der Triazinverbindung 0,05 bis 1,5 Mole einer organischen Zinnverbindung der allgemeinen Formel

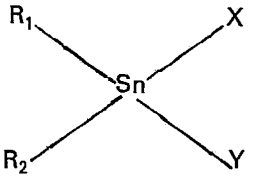

(I),

in der $R_1$ und $R_2$, die gleich oder verschieden sein können, je einen Alkyl- oder Cycloalkylrest und X und Y, die gleich oder verschieden sein können, je einen Alkyl- oder Cycloalkylrest, den Rest einer organischen Säure, der gegebenenfalls eine weitere veresterte Carboxylgruppe enthalten kann, den Rest einer anorganischen Säure, eine Thioalkylgruppe, die gegebenenfalls durch eine mit aliphatischen Alkoholen veresterte Carboxylgruppe tragen kann, oder X und Y gemeinsam Sauerstoff, den Rest einer zweibasischen anorganischen oder organischen Säure oder einen Rest der Formel $-S-(CH_2)_n-COO-$ bedeutet, in der n als die Zahl 1 oder 2 definiert ist, gegebenenfalls neben den üblichen Gleitmitteln, Pigmenten und/oder Stabilisierungsmitteln enthalten. Die Alkylreste $R_1$ und $R_2$ können hierbei bevorzugt 3 bis 10 Kohlenstoffatome haben. Bedeuten X und/oder Y ebenfalls Alkyl, so sind auch hier solche mit 3 bis 10 C-Atomen bevorzugt. Als gut wirkende Verbindungen der Formel I können beispielsweise genannt werden:
Dibutylzinnoxyd, Dioctylzinnoxyd, Tetra-n-octylzinn, Di-n-butylzinn-dilaureat, Di-n-octylzinndilaureat, Di-n-octylzinn-phosphit, Dioctylzinnmaleinat, Di-butylzinnmaleinat, Di-n-octylzinndi-(thioglykolsäure-n-octylester), Dibutylzinndi-(thioglykolsäure-octylester), Dioctylzinndi-(maleinatmethylester), Dibutylzinndi-maleinat-methylester, Dibutylzinndibenzoat, Dibutylzinnphthalat und Dioctyl-zinn-thioglykolat, während beispielsweise andere Zinnverbindungen wie Monooctylzinnoxyd oder Calciumoxyd bzw. -hydroxyd zwar ausgezeichnet stabilisierend wirken, jedoch gleichzeitig die flammhemmende Wirkung der erfindungsgemäss eingesetzten bromierten Triazinverbindung aufheben.

Besonders bevorzugt sind solche Zinnverbindungen der Formel I, in denen X und Y je einen Maleinsäureesterrest darstellen oder X und Y gemeinsam ein Maleinsäurerest sind.

Sehr vorteilhaft ist, dass der Anteil an der bromierten Triazinverbindung in der Faser bereits bei niedrigen Zusätzen seine volle Wirkung entfaltet, so dass die Fasereigenschaften dadurch praktisch nicht beeinflusst werden. Die beste Kombination von flammhemmender Wirkung bei geringstem Einfluss auf die Eigenschaften der Faser werden bei einem Gehalt an Triazinverbindung in der Faser von 1 bis 3 Gew.% erzielt, wobei die Menge an Synergist dann vorzugsweise unter 1 Gew.% bleiben kann. Die bevorzugte Menge an Zinnverbindung der Formel I beträgt dann 0,1 bis 0,3 Mol pro Mol Triazinverbindung.

Ein weiterer Gegenstand der vorliegenden Erfindung ist ein Verfahren zur Herstellung der erfindungsgemässen, schwer entflammbaren Faser, das dadurch gekennzeichnet ist, dass eine Mischung von Polypropylen mit einem Äthylengehalt von 0 bis maximal 10 Gew.% mit einem Gehalt von 0,5 bis 10 Gew.% 1,3,5-Tris-(2,3-dibrompropyl)-2,4,6-trioxohexahydrotriazin und 0,15 bis 3,5 Gew.% Antimontrioxyd sowie pro Mol der Triazinverbindung 0,05 bis 1,5 Mole an der organischen Zinnverbindung der Formel I sowie gegebenenfalls an den üblichen Gleitmitteln, Pigmenten und/oder Stabilisierungsmitteln dem Schmelzspinnverfahren unterworfen wird.

Hierbei kann die fertige Polypropylenmischung, die z.B. in granulierter Form vorliegt, aufgeschmolzen und versponnen werden. Es ist aber auch möglich, die Zusätze an dem flammhemmend wirkenden System erst im Extruder vorzunehmen, indem z.B. die Triazinverbindung, das $Sb_2O_3$ und die Zinnverbindung der Formel I über einen Seitenextruder dem aufgeschmolzenen Polypropylen zugesetzt wird. Diese Zusätze können hierbei als Reinsubstanzen oder als Konzentrat (master batch) gehandhabt werden. Als Bindemittel für letzteres dienen hierbei entweder das Polypropylen oder auch andere mit dem Polypropylen verträgliche Kunststoffe, wie z.B. andere Polyolefine.

Die auf diese Weise mit dem Flammschutzmittel versehene Polypropylenschmelze lässt sich sowohl im Kurzspinnverfahren, das durch niedere Abzugsgeschwindigkeiten (5 bis 50 m/min) gekennzeichnet ist, als auch im konventionellen Schmelzspinnverfahren, das typische Abzugsgeschwindigkeiten von 100 bis 1000 m/min aufweist, als auch im sogenannten Schnellspinnverfahren (Abzugsgeschwindigkeit $>$1000 m/min), als auch im sogenannten «jet-spinning» bis zu extremen Gechwindigkeiten von 4000 m/min verspinnen, bzw. zu einem Endlosfaservlies verarbeiten.

Die auf diese Weise erzeugten Fasern lassen sich in gleicher Weise wie nicht flammhemmend ausgerüstete Polypropylenfasern verstrecken, kräuseln, zu Stapelfasern weiter verarbeiten und mit den üblichen Avivagen ausrüsten.

Der flammhemmend ausgerüsteten Polypropylenschmelze können vor dem Verspinnen ohne Wirkungseinbusse noch Pigmente, Antioxydantien, Lichtschutzmittel und Gleitmittel, aber auch radikalbildende Peroxyde in Form der Reinsubstanzen oder als Konzentrate zugesetzt werden. Letztere bewirken einen Molekülabbau (Degradierung) unter Herabsetzung des Molgewichtes und können durch die dabei eintretende Vergleichmässigung des Molgewichtes einen günstigen Einfluss auf die Fasereigenschaften ausüben. Überraschenderweise wird durch diese Behandlung die flammhemmende Wirkung der erfindungsgemässen Zusätze nicht beeinträchtigt.

Die Überprüfung der Schwerentflammbarkeit der erfindungsgemässen Faser erfolgte im Kleinbrenntest nach DIN 53438.

Der Brenntest wird nach der DIN-Norm mit textilen Flächengebilden durchgeführt, wobei folgende Beurteilungskriterien herangezogen werden:

a) Die ausgebrannte Länge liegt unter 150 mm, die Probe verlischt von selbst. Klasse $K_1$

b) Die Flammenspitze des brennenden Probekörpers erreicht die Messmarke von 150 mm in 20 oder mehr Sekunden. Klasse $K_2$

c) Die Flammenspitze des brennenden Probekörpers erreicht die Messmarke von 150 mm in weniger als 20 Sekunden. Klasse $K_3$. Die Probe ist brennbar.

Die Auswirkungen der thermischen Zersetzung des Flammschutzmittels, die dabei entstehende Verfärbung der Polypropylenschmelze, sowie die mit der Zersetzung verbundene Korrosion kann leicht anhand von Mehrfach-Extrusion bei hohen Temperaturen mit Hilfe eines Labor-Extruders untersucht werden.

Daten des Extruders:

Schnecke: 19,1 mm Durchmesser, Schneckenlänge 20 D, Polyolefinschnecke, 3 Stufen, Kompressionsverhältnis 1:4

Runddüse: 5 mm Durchmesser, Wasserbad, Stranggranuliereinrichtung.

Für alle Versuche wurde die Schneckendrehzahl mit 100 UpM konstant gehalten, die Massetemperatur-Angaben beziehen sich auf die Temperaturmessung an der Schneckenspitze.

Die Auswirkung der Zersetzung durch die HBr-Korrosion wird nach folgender Methode ermittelt:

Die nach der Extrusion, Kühlung und Granulierung des Stranges erhaltene Granulatprobe von 15 g Gewicht wird bei 230 °C in einer Presse in Kontakt mit einer entfetteten und auf Hochglanz polierten Stahlplatte für die Dauer von 7 Minuten zu einer Platte von 70×70×2 mm verpresst. Nach dem Abkühlen wird die Polypropylenplatte vorsichtig vom Stahl gelöst, die Stahlplatte wird anschliessend 24 Stunden lang bei 23 °C und 100% relativer Luftfeuchtigkeit gelagert und anschliessend folgend beurteilt:

Note 0: völlig frei von Korrosion

Note 1: leichte Rostbildung (durch Abwischen mit einem sauberen Wattebausch und Verfärbung der Watte erkennbar)

Note 2: Oberfläche gleichmässig mit Rost bedeckt

Note 3: Oberfläche mit starker Rostbildung bedeckt.

Die Mehrfachextrusionsversuche erfolgten sowohl bei 250 °C als auch bei 280 °C aus granuliertem Produkt. Die Einknetung der Additive erfolgte unter schonenden Bedingungen bei 210 °C Massetemperatur. Es soll erwähnt werden, dass für die Untersuchung der thermischen Zersetzung des Flammhemmers bewusst ein Polypropylen mit hohem Molekulargewicht gewählt wurde, um die bei den hohen Testtemperaturen (250 bis 280 °C) durchzuführende Mehrfachextrusion mit jeweils dazwischenliegender Granulation gut durchführen zu können. Es konnte bei diesen Versuchen weiters festgestellt werden, dass die Molekulargewichtsgrösse des Polypropylens keinen Einfluss auf die HBr-Abspaltung aus dem Flammhemmer hat.

Die nachfolgenden Beispiele sollen die Herstellung und die Eigenschaften der erfindungsgemässen Faser näher erläutern, ohne die Erfindung dadurch beschränken zu wollen.

Beispiel 1 bis 10:

Eine Polypropylenmischung auf Basis eines Polypropylens mit einem Schmelzindex von 12 folgender Zusammensetzung: Calciumstearat 0,2 Gew.%, 2,6-Di-tert.butyl-p-kresol 0,1 Gew.%, Penta-erithrityl-tetratris-[3-(3,5-di-tert.-butyl-4-hydroxyphenyl)propionat 0,1 Gew.%, 1,3,5-Tris-(2,3-dibrompropyl)-2,4,6-trioxohexahydrotriazin 3,1 Gew.%, Antimontrioxyd 1,0 Gew.%, der in der Tabelle angegebenen organischen Zinnverbindung 1,0 Gew.% oder 2,0 Gew.% und Polypropylen 94,2 Gew.% wird auf einer Schmelzspinnanlage mit einem Schneckendurchmesser von 25 mm und 24 D Länge bei einer Massetemperatur von 255 °C, einer Schneckendrehzahl von 74 UpM und einer Abzugsgeschwindigkeit von 470 m/min. zu Fasern mit einem Gesamttiter von 346 tex bei 68 Kapillaren versponnen.

Die Verstreckung der auf diese Weise hergestellten Primärfäden erfolgte auf einer Streckzwirnmaschine bei einer Temperatur von 130 °C und einem Reckverhältnis von 1:3. Der Endtiter der erhaltenen Fäden lag bei 1,15 tex, der Titer der Einzelkapillaren bei 1,7 tex. Die Eigenschaften der so erhaltenen Fasern sind in der folgenden Tabelle 1 dargestellt.

Tabelle 1

| Beispiel Nr.: | organische Zinnverbindung | Gew.% Verb. I | Mol Ver. I pro Mol Triazin | Reissfestigkeit cN/tex | Reissdehnung % |
|---|---|---|---|---|---|
| 1 | Dibutylzinnmaleinat | 1 | 0,70 | 34 | 62 |
| 2 | Dioctylzinnmaleinat | 1 | 0,53 | 33 | 69 |
| 3 | Dibutylzinnoxyd | 1 | 1,0 | 35 | 57 |
| 4 | Dioctylzinndimaleinat-methylester | 1 | 0,40 | 32 | 75 |
| 5 | Dibutylzinndimaleinat-methylester | 1 | 0,50 | 31 | 70 |

Tabelle 1 (Fortsetzung)

| Beispiel Nr.: | organische Zinnverbindung | Gew.% Verb. I | Mol Ver. I pro Mol Triazin | Reissfestigkeit cN/tex | Reissdehnung % |
|---|---|---|---|---|---|
| 6 | Dioctylzinndithioglykolsäureoctylester | 1 | 0,34 | 36 | 55 |
| 7 | Dibutylzinndithioglykolsäureoctylester | 1 | 0,4 | 32 | 60 |
| 8 | Dioctylzinndimaleinatmethylester | 2 | 0,80 | 34 | 85 |
| 9 | Dibutylzinndimaleinatmethylester | 2 | 1,00 | 33 | 75 |
| 10 | Dioctylzinnthioglykolat | 1 | 0,56 | 34 | 65 |

Beispiel 11

Polypropylenmischungen, die gemäss den Beispielen 1 bis 7 und 10 zu Fasern verarbeitet wurden, wurden dem Brenntest gemäss DIN 53438 (Kleinbrenntest) unterworfen: Die Fasern wurden zu einem Garn von 230 tex/136 Kapillaren gefacht und anschliessend auf eine Rundstrickmaschine zu einem Gewirke mit einem Flächengewicht von 530 g/m$^2$ verarbeitet. Die Prüfung dieses Flächengebildes erfolgte im Kleinbrenntest durch Kantenbeflammung. Die Ergebnisse sind in Tabelle 2 zusammengefasst:

Tabelle 2: Mittelwerte aus 5 Einzelbestimmungen

| Beispiel Nr.: | Brenndauer (sec.) | ausgebrannte Länge (mm) | Klasse |
|---|---|---|---|
| 1 | 15 | 36 | $K_1$ |
| 2 | 16 | 37 | $K_1$ |
| 3 | 17 | 42 | $K_1$ |
| 4 | 14 | 38 | $K_1$ |
| 5 | 15 | 33 | $K_1$ |
| 6 | 21 | 50 | $K_1$ |
| 7 | 11 | 35 | $K_1$ |
| 10 | 13 | 68 | $K_1$ |

Beispiel 12

Mischungen, die gemäss den Beispielen 1, 2, 4, 8, 9 und 10 zu Fasern verarbeitet wurden, wurden dem Korrosionstest unterworfen. Als Blindprobe wurde eine Mischung mitgeführt, die die gleichen Bestandteile enthält, wie die Mischungen gemäss Beispiel 1 bis 10, der jedoch keine Zinnverbindung der Formel I zugesetzt wurde. Die Ergebnisse sind in der Tabelle 3 zusammengefasst.

Tabelle 3

| Mischung gemäss Beispiel | Verbindung der Formel I Zusatz in Gew.% | Korrosionsgrad |
|---|---|---|
| 1 | 1 | 0 |
| 2 | 1 | 0 |
| 4 | 1 | 0 |
| 8 | 2 | 0 |
| 9 | 2 | 0 |
| 10 | 1 | 0 |
| | Blindprobe | 3 |

**Patentansprüche**

1. Schwer enflammbare Polypropylenfaser mit einem Äthylengehalt von 0 bis maximal 10 Gew.%, dadurch gekennzeichnet, dass sie 0,5 bis 10 Gew.% 1,3,5-Tris-(2,3-dibrompropyl)-2,4,6-trioxo-hexahydrotriazin und 0,15 bis 3,5 Gew.% $Sb_2O_3$ sowie pro Mol der Triazinverbindung 0,05 bis 1,5 Mole einer organischen Zinnverbindung der allgemeinen Formel

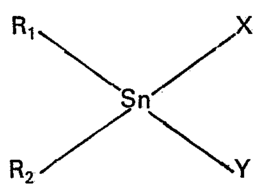

(I),

in der $R_1$ und $R_2$, die gleich oder verschieden sein können, je einen Alkyl- oder Cycloalkylrest und X und Y, die gleich oder verschieden sein können, je einen Alkyl- oder Cycloalkylrest, den Rest einer organischen Säure, der gegebenenfalls eine weitere veresterte Carboxylgruppe enthalten kann, den Rest einer anorganischen Säure, eine Thioalkylgruppe, die gegebenenfalls eine mit aliphatischen Alkoholen veresterte Carboxylgruppe tragen kann, oder X und Y gemeinsam Sauerstoff, den Rest einer zweibasischen, anorganischen oder organischen Säure oder einen Rest der Formel $-S-(CH_2)_n-COO-$ bedeutet, in der n als die Zahl 1 oder 2 definiert ist, gegebenenfalls neben den üblichen Gleitmitteln, Pigmenten und/oder Stablisierungsmitteln enthält.

2. Schwer entflammbare Polypropylenfaser gemäss Anspruch 1, dadurch gekennzeichnet, dass als Zinnverbindungen der Formel I solche verwendet werden, in denen X und Y je einen Maleinsäurealkylesterrest oder gemeinsam einen Maleinsäurerest darstellen.

3. Schwer entflammbare Polypropylenfaser gemäss den Ansprüchen 1 und 2, dadurch gekennzeichnet, dass der Gehalt an der Triazinverbindung 1 bis 3 Gew.% beträgt.

4. Schwer entflammbare Polypropylenfaser gemäss Anspruch 3, dadurch gekennzeichnet, dass die Menge an $Sb_2O_3$ 0,3 bis 1 Gew.% beträgt.

5. Schwer entflammbare Polypropylenfaser gemäss den Ansprüchen 1 bis 4, dadurch gekennzeichnet, dass die Menge der Zinnverbin-

dung der Formel I 0,1 bis 0,3 Mol pro Mol Triazinverbindung beträgt.

6. Verfahren zur Herstellung der schwer entflammbaren Polypropylenfaser gemäss den Ansprüchen 1 bis 5, dadurch gekennzeichnet, dass eine Mischung von Polypropylen mit einem Äthylengehalt von 0 bis maximal 10 Gew.%, welche 0,5 bis 10 Gew.% 1,3,5-Tris-(2,3-dibrompropyl)-2,4,6-trioxo-hexahydrotriazin und 0,15 bis 3,5 Gew.% Antimontrioxyd sowie pro Mol der Triazinverbindung 0,05 bis 1,5 Mole einer organischen Zinnverbindung der allgemeinen Formel

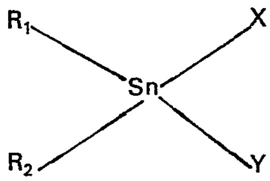

(I),

in der $R_1$ und $R_2$ je ein Alkyl- oder Cycloalkylrest und X und Y, die gleich oder verschieden sein können, je ein Alkyl- oder Cycloalkylrest, den Rest einer organischen Säure, der gegebenenfalls eine weitere veresterte Carboxylgruppe enthalten kann, den Rest einer anorganischen Säure, eine Thioalkylgruppe, die gegebenenfalls eine mit aliphatischen Alkoholen veresterte Carboxylgruppe tragen kann oder X und Y gemeinsam Sauerstoff, den Rest einer zweibasischen, anorganischen oder organischen Säure oder einen Rest der Formel $-S-(CH_2)_n-COO-$ bedeutet, in der n als die Zahl 1 oder 2 definiert ist und gegebenenfalls die üblichen Gleitmittel, Pigmente und/oder Stabilisierungsmittel enthält, dem Schmelz-Spinnverfahren unterworfen wird.

7. Verfahren nach Anspruch 6, dadurch gekennzeichnet, dass die fertige Polypropylenmischung aufgeschmolzen und versponnen wird.

8. Verfahren nach Anspruch 6, dadurch gekennzeichnet, dass Polypropylen aufgeschmolzen, mit einem Konzentrat der Triazinverbindung, dem $Sb_2O_3$ und der Zinnverbindung der Formel I, in dem als Bindemittel Polypropylen oder andere Polyolefine dienen, gemischt und nach Mischung direkt der Spinndüse zugeführt wird.

9. Verfahren nach den Ansprüchen 6 bis 8, dadurch gekennzeichnet, dass die fertige Spinnmischung vor der Spinndüse einer Degradierung durch radikalbildende Substanzen unterworfen wird.

## Claims

1. Polypropylene fibre which is difficult to ignite and has an ethylene content of 0 to at most 10% by weight, characterised in that it contains 0.5 to 10% by weight of 1,3,5-tris-(2,3-dibromopropyl)-2,4,6-trioxo-hexahydrotriazine and 0.15 to 3.5% by weight of $Sb_2O_3$, and per mol of the triazine compound, 0.05 to 1.5 mols of an organic tin compound of the general formula

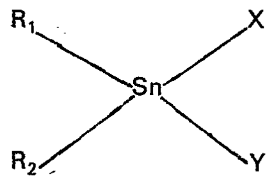

(I)

in which $R_1$ and $R_2$, which can be identical or different, each denote an alkyl or cycloalkyl radical and X and Y, which can be identical or different, each denote analkyl or cycloalkyl radical, the radical of an organic acid, which can optionally contain a further esterified carboxyl group, the radical of an inorganic acid or a thioalkyl group, which can optionally carry a carboxyl group esterified with aliphatic alcohols, or X and Y together denote oxygen, the radical of a dibasic inorganic or organic acid or a radical of the formula $-S-(CH_2)_n-COO-$ in which n is defined as the integer 1 or 2, if appropriate in addition to the customary lubricants, pigments and/or stabilisers.

2. Polypropylene fibre which is difficult to ignite, according to Claim 1, characterised in that tin compounds of the formula I which are used are those in which X and Y each represent a maleic acid alkyl ester radical or together represent a maleic acid radical.

3. Polypropylene fibre which is difficult to ignite, according to Claims 1 and 2, characterised in that the triazine compound content is 1 to 3% by weight.

4. Polypropylene fibre which is difficult to ignite, according to Claim 3, characterised in that the amount of $Sb_2O_3$ is 0.3 to 1% by weight.

5. Polyprylene fibre which is difficult to ignite, according to Claims 1 to 4, characterised in that the amount of tin compound of the formula I is 0.1 to 0.3 mol, per mol of triazine compound.

6. Process for the manufacture of the polypropylene fibre which is difficult to ignite, according to Claims 1 to 5, characterised in that a mixture of polypropylene which has an ethylene content of 0 to at most 10% by weight and which contains 0.5 to 10% by weight of 1,3,5-tris-(2,3-dibromopropyl)-2,4,6-trioxo-hexahydrotriazine and 0.15 to3.5% by weight of antimony trioxide, and per mol of the triazine compound, 0.05 to 1.5 mols of an organic tin compound of the general formula

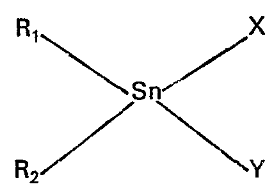

(I)

in which $R_1$ and $R_2$ each denote an alkyl or cycloalkyl radical and X and Y, which can be identical or different, each denote an alkyl or cycloalkyl radical, the radical of an organic acid, which can optionally contain a further esterified carboxyl group, the radical of an inorganic acid or a thioalkyl group, which can optionally carry a carboxyl group esterified with aliphatic alcohols, or X and

Y together denote oxygen, the radical of a dibasic inorganic or organic acid or a radical of the formula $-S-(CH_2)_n-COO-$ in which n is defined as the integer 1 or 2, and if appropriate the customary lubricants, pigments and/or stabilisers, is subjected to the melt spinning process.

7. Process according to Claim 6, characterised in that the finished polypropylene mixture is melted and spun.

8. Process according to Claim 6, characterised in that the polypropylene is melted, the melt is mixed with a concentrate of the triazine compound, the $Sb_2O_3$ and the tin compound of the formula I, in which polypropylene or other polyolefines are used as a binder, and, after mixing, the mixture is fed directly to the spinnerette.

9. Process according to Claims 6 to 8, characterised in that the finished spinning mixture is subjected to degradation by free radical-forming substances before the spinnerette.

**Revendications**

1. Fibres en polypropylène difficilement inflammables ayant une teneur en éthylène allant de 0 jusqu'à un maximum de 10% en poids, caractérisées en ce qu'elles renferment de 0,5 à 10% en poids de 1,3,5-tris-(2,3-dibromopropyl)-2,4,6-trioxohexahydrotriazine et de 0,15 à 3,5% en poids de $Sb_2O_3$ ainsi que, par mole de composé de triazine, de 0,05 à 1,5 mole d'un composé organique de l'étain de formule générale:

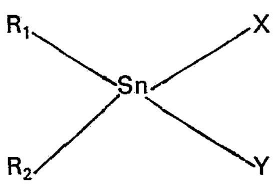

(I)

dans laquelle $R_1$ et $R_2$, qui peuvent être identiques ou différents, désignent chacun un radical alcoyle ou cycloalcoyle et X et Y, qui peuvent être identiques ou différents, désignent chacun un radical alcoyle ou cycloalcolye, le reste d'un acide organique, qui peut renfermer le cas échéant un autre groupe carboxyle estérifié, le reste d'un acide inorganique, un groupe thioalcoyle, qui peut porter le cas échéant un groupe carboxyle estérifié par des alcools aliphatiques, ou bien X et Y désignent conjointement de l'oxygène, le reste d'un diacide inorganique ou organique, ou un radical de formule $-S-(CH_2)_n-COO-$, dans laquelle n est égal à 1 ou 2, le cas échéant outre les lubrifiants, les pigments et (ou) les agents de stabilisation usuels.

2. Fibres en polypropylène difficilement inflamables suivant la revendication 1, caractérisées en ce qu'elles renferment, comme composés de l'étain de formule (I), des composés dans lesquels X et Y désignent chacun un radical maléate d'alcoyle ou conjointement un radical acide maléique.

3. Fibres en polypropylène difficilement inflammables suivant les revendications 1 et 2, caractérisées en ce que la teneur en composé de triazine représente de 1 à 3% en poids.

4. Fibres en polypropylène difficilement inflammables suivant la revendication 3, caractérisées en ce que la quantité de $Sb_2O_3$ va de 0,3 à 1% en poids.

5. Fibres en polypropylène difficilement inflammables suivant les revendications 1 à 4, caractérisées en ce que la quantité de composé de l'étain de formule (I) représente de 0,1 à 0,3 mole par mole de composé de triazine.

6. Procédé pour la fabrication des fibres en polypropylène difficilement inflammables suivant les revendictions 1 à 5, caractérisé en ce qu'on soumet à un processus de filage en fusion un mélange de polypropylène ayant une teneur en éthylène allant de 0 jusqu'à un maximum de 10% en poids, renfermant de 0,5 à 10% en poids de 1,3,5-tris-(2,3-dibromopropyl)-2,4,6-trioxohexahydrotriazine et de 0,15 à 3,5% en poids de trioxyde d'antimoine, ainsi que, par mole de composé de triazine, de 0,05 à 1,5 mole d'un composé organique de l'étain de formule générale:

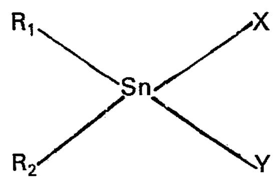

(I)

dans laquelle $R_1$ et $R_2$ désignent chacun un radical alcoyle ou cycloalcoyle, et X et Y qui peuvent être identiques ou différents, désignent chacun un radical alcoyle ou cycloalcoyle, le reste d'un acide organique qui peut renfermer le cas échéant un autre groupe carboxyle estérifié, le reste d'un acide inorganique, un groupe thioalcoyle, qui peut porter le cas échéant un groupe carboxyle estérifié par des alcools aliphatiques, ou bien X et Y représentent conjointement de l'oxygène, le reste d'un diacide inorganique ou organique, ou un radical de formule $-S-(CH_2)_n-COO-$, dans laquelle n est égal à 1 ou 2, et renfermant le cas échéant en outre les lubrifiants, les pigments et (ou) les agents de stabilisation usuels.

7. Procédé suivant la revendication 6, caractérisé en ce qu'on soumet le mélange de polypropylène préparé à une fusion et à un filage.

8. Procédé suivant la revendication 6, caractérisé en ce qu'on provoque la fusion de polypropylène, on le mélange avec un concentré de composé de triazine, le $Sb_2O_3$ et le composé d'étain de formule (I), dans lequel le polypropylène ou d'autres polyoléfines servent de liant, puis après mélange on le transfère directement à la buse de filage.

9. Procédé suivant les revendictions 6 à 8, caractérisé en ce qu'on soumet le mélange de filage préparé en avant de la buse de filage, à une dégradation des substances formant des radicaux.